Europäisches Patentamt

European Patent Office

Office européen des brevets

(11) Numéro de publication: **0 343 036**

**A1**

## (12) DEMANDE DE BREVET EUROPEEN

(21) Numéro de dépôt: **89401291.3**

(22) Date de dépôt: **10.05.89**

(51) Int. Cl.⁴: **F 16 L 37/12**

(30) Priorité: **20.05.88 FR 8807134**

(43) Date de publication de la demande:
**23.11.89 Bulletin 89/47**

(84) Etats contractants désignés: **DE GB IT**

(71) Demandeur: **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur: **Petiot, Jean-Paul**
**42, Route d'Orsay**
**F-91460 Marcoussis (FR)**

(74) Mandataire: **Boivin, Claude**
**9, rue Edouard-Charton**
**F-78000 Versailles (FR)**

(54) **Raccord rapide pour tuyau.**

㉗ Raccord rapide propre à assurer la fixation d'un tuyau (1) dans un perçage (2) d'une pièce (3), comportant un élément élastique (4) pouvant s'encliqueter sur le tuyau (1) et pouvant lui-même s'encliqueter dans le perçage de la pièce (3).

L'élément élastique (4) présente des pattes (4c) pouvant s'encliqueter derrière un bourrelet (1a) du tuyau (1); il comporte une bague de démontage (7) qui présente une fente longitudinale (7a) et est montée coulissante sur le tuyau en pouvant s'engager entre celui-ci et les pattes (4c) de l'élément élastique.

FIG.1

EP 0 343 036 A1

## Description

### Raccord rapide pour tuyau

La présente invention concerne un raccord rapide propre à assurer la fixation d'un tuyau dans un perçage d'une pièce à alimenter, du type comportant un élément élastique pouvant s'encliqueter sur le tuyau et pouvant lui-même s'encliqueter dans le perçage de la pièce; un raccord de ce genre est décrit dans le brevet US 3,711,125.

Le démontage d'un tuyau fixé à une pièce par un raccord du type ci-dessus n'est pas aisé car il est difficile de séparer l'élément élastique de la pièce dans laquelle il est encliqueté.

La présente invention a pour objet un raccord rapide avec lequel le démontage du tuyau est au contraire très facile.

Le raccord selon l'invention est caractérisé en ce que l'élément élastique présente des pattes pouvant s'encliqueter derrière un bourrelet du tuyau, et en ce qu'il comporte une bague de démontage qui présente une fente longitudinale et est montée coulissante sur le tuyau en pouvant s'engager entre celui-ci et les pattes de l'élément élastique. Il suffit alors de pousser la bague de démontage vers la pièce pour écarter les pattes qui se dégagent du bourrelet du tuyau, ce qui permet le retrait de celui-ci.

Dans un mode de réalisation de l'invention, la bague de démontage présente une série de pattes fendues propres à coopérer avec un bourrelet du tuyau pour limiter le déplacement de la bague vers l'arrière.

On a décrit ci-après, à titre d'exemple non limitatif, divers modes de réalisation du raccord selon l'invention, avec référence aux dessins annexés dans lesquels :

La Figure 1 est une vue en coupe montrant le tuyau séparé de la pièce, dans un premier mode de réalisation;

La Figure 2 est une vue en perspective de l'élément élastique s'encliquetant et de la bague de démontage;

La Figure 3 est une vue semblable à la Figure 1, le tuyau étant monté dans la pièce;

Les Figures 4 et 5 sont des vues semblables à la Figure 3 de deux autres modes de réalisation

Au dessin, on voit en 1 un tuyau qui doit être fixé dans un perçage 2 d'une pièce 3.

La fixation du tuyau dans le perçage de la pièce 3 peut être assurée par un ressort circulaire 4 qui est emmanché sur le tuyau 1 et clippé sur celui-ci. A cet effet, ce ressort comporte une partie centrale cylindrique 4a qui peut présenter ou non une fente longitudinale 4b. Cette partie 4a est prolongée, du côté de l'extrémité du tuyau 1, par des pattes 4c et 4d. Les pattes 4c sont coniques, ou plates mais tangentes à un cône. Elles prennent appui derrière un bourrelet 1a du tuyau 1, ce qui empêche le retrait du ressort 4 lorsqu'il a été emmanché sur le tuyau. Les pattes 4d, qui sont au nombre de trois dans le mode de réalisation représenté, sont cylindriques avec le même diamètre que la partie centrale 4a et comportent un bord rabattu 4e prenant appui sur la face avant du bourrelet 1a. A son extrémité opposée, la partie 4a du ressort est prolongée par des pattes coniques 4f pouvant venir s'encliqueter lors du montage, dans un alésage conique 5 de la pièce 3, qui se raccorde par un alésage cylindrique 6 au perçage 2.

Il est prévu une bague de démontage 7 qui présente sur toute sa longueur une fente longitudinale 7a et est emmanchée sur le tuyau 1, entre ce tuyau et les pattes coniniques 4f du ressort 4. Cette bague est prolongée vers l'arrière par des pattes fendues 7b qui arrêtent le déplacement de la bague vers l'arrière en venant buter contre un second bourrelet 1b du tuyau 1.

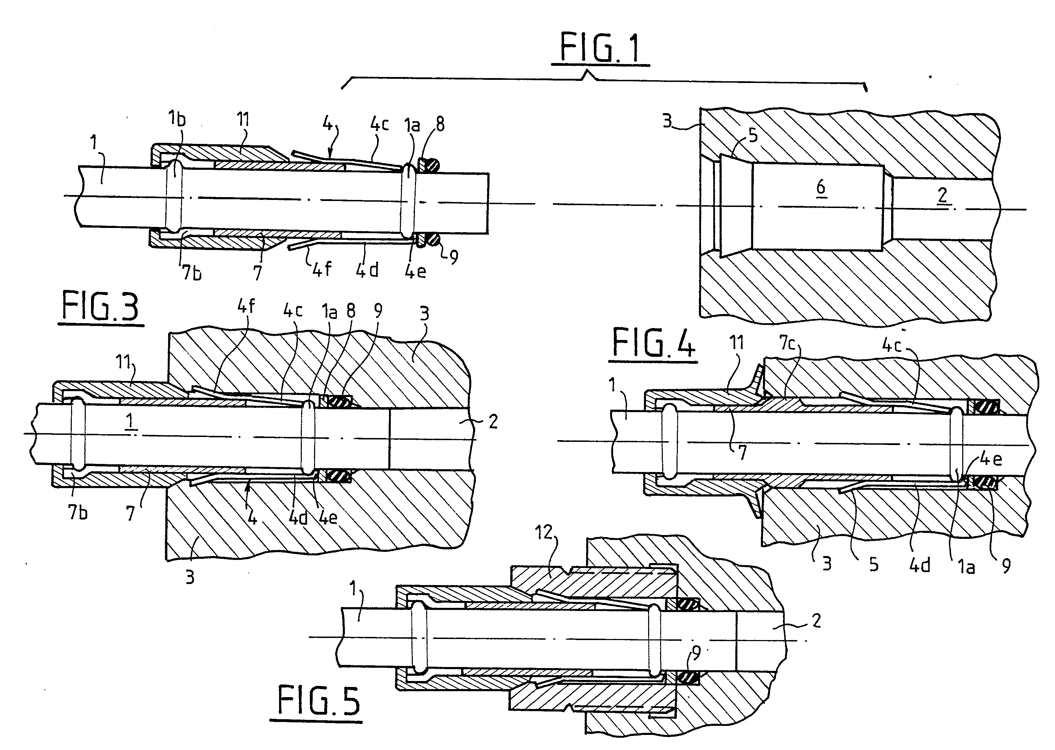

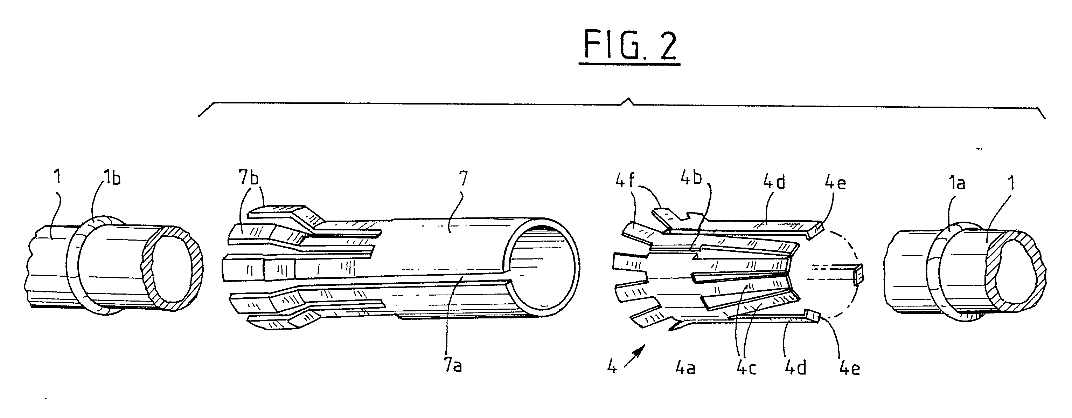

Pour fixer le tuyau 1 dans la pièce 3, on emmanche sur ce tuyau la bague 7, puis le ressort 4. On dispose alors une bague d'appui 8 et un joint torique 9 sur le tuyau devant le bourrelet 1a et on emmanche le tout dans la pièce 3; en fin de mouvement, le joint se trouve dans le fond de l'alésage cylindrique 6 et les pattes coniques 4f s'encliquètent dans l'alésage conique 5 de la pièce 3 (Figure 3).

Pour démonter le tuyau, il suffit de pousser vers l'avant la bague 7 qui écarte les pattes 4c qui libèrent le bourrelet 1a du tuyau 1; celui-ci peut alors être retiré.

On peut prévoir un capuchon 11 de protection anticorrosion qui recouvre la partie de la bague 7 extérieure au ressort 4, donc extérieure à la pièce 3 quand le tuyau 1 est monté. On fait coulisser ce capuchon vers l'arrière, lorsqu'on veut démonter le tuyau.

Pour mieux assurer l'implantation du tuyau 1 dans la pièce 3, la bague de démontage 7 peut présenter un bourrelet annulaire 7c qui s'appuie sur la paroi de l'alésage 6 (voir Figure 4). Le capuchon 11 présente à sa base une lèvre mince annulaire 11a qui assure l'étanchéité en venant presser sur la pièce 3.

Dans le mode de réalisation de la Figure 5, le tuyau 1 est fixé dans un perçage d'une pièce intermédiaire cylindrique 12 qui est vissée dans la pièce 3, ce qui permet d'avoir accès au joint torique 9.

Il va de soi que la présente invention ne doit pas être considérée comme limitée aux divers modes de réalisation décrits et représentés, mais en couvre, au contraire, toutes les variantes. C'est ainsi, en particulier, que le ressort 4 peut ne pas comporter la fente longitudinale 4b, auquel cas il faut prévoir un léger jeu entre ce ressort et la bague de démontage 7.

## Revendications

1. Raccord rapide propre è assurer la fixation d'un tuyau (1) dans un perçage (2) d'une pièce (3),comportant un élément élastique (4) pouvant s'encliqueter sur le tuyau (1) et pouvant lui-même s'encliqueter dans le perçage de la pièce (3).

caractérisé en ce que l'élément élastique (4) présente des pattes (4c) pouvant s'encliqueter derrière un bourrelet (1a) du tuyau (1), et en ce qu'il comporte une bague de démontage (7) qui présente une fente longitudinale (7a) et est montée coulissante sur le tuyau en pouvant s'engager entre celui-ci et les pattes (4c) de l'élément élastique.

2. Raccord rapide selon la revendication 1, caractérisé en ce que la bague de démontage (7) présente une série de pattes fendues (7b) propres à coopérer avec un bourrelet (1b) du tuyau pour limiter le déplacement de la bague vers l'arrière.

3. Raccord selon la revendication 1 ou 2, caractérisé en ce que les pattes (4c) sont coniques, ou plates et tangentes à un cône, et en ce que l'élément élastique (4) présente, entre certaines des pattes (4c), des pattes cylindriques (4d) qui comportent un bord rabattu (4e) pouvant prendre appui sur la face avant du bourrelet (1a).

4. Raccord selon l'une des revendications précédentes, caractérisé en ce que la bague de démontage (7) présente un bourrelet annulaire (7c) propre à prendre appui sur la paroi du perçage de la pièce.

5. Raccord selon l'une quelconque des revendications précédentes, caractérisé par un capuchon de protection (11) qui recouvre la partie de la bague (7) extérieure à l'élément élastique (4).

6. Raccord selon la revendication 6, caractérisé en ce que le capuchon (11) présente, à sa base, une lèvre mince annulaire (11a) propre à presser sur la pièce (3).

7. Raccord selon l'une quelconque des revendications précédentes, caractérisé par une pièce intermèdiaire (12) dans un perçage de laquelle le tuyau peut être fixé et qui est vissée dans la pièce (3).

FIG.1

FIG.3

FIG.4

FIG.5

FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-3 533 619 (SCHMELZER)<br>* figures 1-3,9A *<br>--- | 1,3,4 | F 16 L  37/12 |
| A | US-A-2 465 197 (CHATHAM)<br>* figures 1,2 *<br>--- | 1,2,4 | |
| A | DE-A-2 307 154 (DAIMLER-BENZ)<br>* figure 1 *<br>--- | 1,2 | |
| A | EP-A-0 193 271 (AEROQUIP)<br>* figures 3,4 *<br>--- | 1,3 | |
| A | DE-A-2 853 281 (FORD-WERKE)<br>* figure 1 *<br>--- | 1,7 | |
| A | US-A-2 523 770 (MARETTE)<br>* figures 1,3 *<br>--- | 5,6 | |
| D,A | US-A-3 711 125 (DEHAR)<br>----- | 1 | |

DOMAINES TECHNIQUES RECHERCHES (Int. Cl.4)

F 16 L

Le présent rapport a été établi pour toutes les revendications

| Lieu de la recherche | Date d'achèvement de la recherche | Examinateur |
|---|---|---|
| BERLIN | 20-07-1989 | SCHLABBACH M |